(19) Europäisches Patentamt
European Patent Office
Office européen des brevets

(11) **EP 4 632 242 A1**

(12) **EUROPEAN PATENT APPLICATION**
published in accordance with Art. 153(4) EPC

(43) Date of publication:
**15.10.2025 Bulletin 2025/42**

(21) Application number: **23900558.0**

(22) Date of filing: **30.11.2023**

(51) International Patent Classification (IPC):
*F16C 27/02* (2006.01)   *F04D 29/056* (2006.01)
*F16C 27/00* (2006.01)

(52) Cooperative Patent Classification (CPC):
**F04D 29/056; F16C 17/03; F16C 27/00;
F16C 27/02; F16F 15/023; F16F 15/04**

(86) International application number:
**PCT/JP2023/042961**

(87) International publication number:
**WO 2024/122443 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 JP 2022196411**

(71) Applicant: **Hitachi Industrial Products, Ltd.
Tokyo 101-0021 (JP)**

(72) Inventors:
• **YAMASHITA Tomoaki
Tokyo 100-8280 (JP)**

• **TAKAHASHI Naohiko
Tokyo 101-0021 (JP)**
• **NISHIDA Kohei
Tokyo 101-0021 (JP)**
• **ONO Masahiko
Tokyo 100-8280 (JP)**
• **HENMI Makoto
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **BEARING DEVICE WITH SQUEEZE FILM DAMPER, AND CENTRIFUGAL COMPRESSOR**

(57) The present invention is to provide a bearing device with a squeeze film damper, which is able to obtain high vibration stability, and to provide a centrifugal compressor including the bearing device. A bearing device (1) with a squeeze film damper according to the present invention includes a plurality of pads (3) that constitute a bearing surface supporting a rotating shaft (2), a bearing housing (4) that accommodates the pads (3), a housing (5) that is located outside the bearing housing (4) in a radial direction, and a plurality of squeeze film damper parts (7) arranged in a circumferential direction at a clearance (11) between the bearing housing (4) and the housing (5). Each of the squeeze film damper parts (7) includes a plurality of elastic bodies (6) that repel a radial force. The plurality of elastic bodies (6) are set such that overall stiffness is different between in a vertical direction and in a horizontal direction.

FIG. 1

**Description**

TECHNICAL FIELD OF THE INVENTION

The present invention relates to a bearing device that is provided with a squeeze film damper to support a rotating shaft, and a centrifugal compressor including a bearing device.

BACKGROUND ART

A bearing device with a squeeze film damper is a bearing device that includes a squeeze film damper on an outer peripheral surface of a main bearing supporting a rotating shaft. The bearing device has high vibration stability and is used for a rotary machine such as a centrifugal compressor and the like. Patent Literature 1 describes an example of a conventional bearing device with a squeeze film damper. A damping bearing described in Patent Literature 1 includes a main bearing for supporting a rotating shaft, a cylindrical cage spring member that is mounted between the main bearing and a housing to elastically support the main bearing on the housing, and a fluid film damper formed on an outer peripheral surface of the main bearing. The main bearing is a tilting pad bearing.

DOCUMENT LIST

PATENT LITERATURE

Patent Literature 1: Japanese Unexamined Patent Application Publication No. 2001-50267

SUMMARY OF INVENTION

TECHNICAL PROBLEM

In the damping bearing described in Patent Literature 1, the tilting pad bearing serving as the main bearing is elastically supported by the cylindrical cage spring member that is mounted between the main bearing and the housing, and the cage spring member has a uniform modulus of elasticity in a circumferential direction. Such a bearing device with a squeeze film damper has high damping performance.
A rotary machine using a bearing device with a squeeze film damper is frequently used under high peripheral speed conditions, and a fluid having a strong fluid force passes through the rotating machine. A strong fluid force may vibrate the rotating shaft of the rotary machine so as to generate unstable vibrations on the rotating shaft. Thus, it is desirable for a bearing device with a squeeze film damper to be able to suppress unstable vibrations caused by a fluid force in addition to damping vibrations caused by the squeeze film damper and provide high vibration stability for the rotating shaft. Unfortunately, a conventional bearing device with a squeeze film damper does not necessarily have sufficiently high vibration stability.
An object of the present invention is to provide a bearing device with a squeeze film damper, which is able to obtain high vibration stability, and to provide a centrifugal compressor including the bearing device.

SOLUTION TO PROBLEM

A bearing device with a squeeze film damper, according to the present invention, comprises: a plurality of pads that constitute a bearing surface supporting a rotating shaft; a bearing housing that accommodates the pads; a housing that is located outside the bearing housing in a radial direction; and a plurality of squeeze film damper parts arranged in a circumferential direction at a clearance between the bearing housing and the housing, wherein each of the squeeze film damper parts includes a plurality of elastic bodies that repel a radial force, and the plurality of elastic bodies are set such that overall stiffness is different between in a vertical direction and in a horizontal direction.
A centrifugal compressor according to the present invention comprises: a rotating shaft; and a bearing device with a squeeze film damper, the bearing device supporting the rotating shaft, wherein the bearing device with the squeeze film damper is a bearing device with a squeeze film damper according to the present invention.

ADVANTAGEOUS EFFECTS OF INVENTION

The present invention provides a bearing device with a squeeze film damper, which is able to obtain high vibration stability, and a centrifugal compressor including the bearing device.

BRIEF DESCRIPTION OF DRAWINGS

[Fig. 1] Fig. 1 is a cross sectional view of a bearing device with a squeeze film damper according to a first embodiment of the present invention, taken along a plane perpendicular to the axial direction.

[Fig. 2] Fig. 2 illustrates a model configured such that the bearing device with the squeeze film damper according to the first embodiment dampens the vibrations of a rotating shaft.

[Fig. 3] Fig. 3 is a cross sectional view of a bearing device with a squeeze film damper according to a third embodiment of the present invention, taken along a plane perpendicular to the axial direction.

[Fig. 4] Fig. 4 illustrates the configuration of a centrifugal compressor 12 including a bearing device 1 with a squeeze film damper according to a fourth embodiment.

DESCRIPTION OF EMBODIMENTS

In a bearing device with a squeeze film damper according to the present invention, a squeeze film damper part includes an elastic body, thereby effectively dampening vibrations by the effects of the squeeze film damper and the elastic body. A centrifugal compressor according to the present invention includes the bearing device with the squeeze film damper according to the present invention, so that unstable vibrations caused by a fluid force can be suppressed by a high vibration stability of the bearing device.

The bearing device with the squeeze film damper and the centrifugal compressor according to the embodiments of the present invention will be described below according to the drawings. Hereinafter, in the bearing device, an extension direction of a rotating shaft to be supported will be referred to as an axial direction, a rotation direction of the rotating shaft will be referred to as a circumferential direction, a direction of a radius of the rotating shaft will be referred to as a radial direction, a vertical direction will be referred to as a X direction, and a horizontal direction will be referred to as a Y direction. Note that the same or corresponding constituent elements are denoted by the same reference numerals in the drawings used in the present specification and repeated descriptions of these constituent elements may be omitted.

FIRST EMBODIMENT

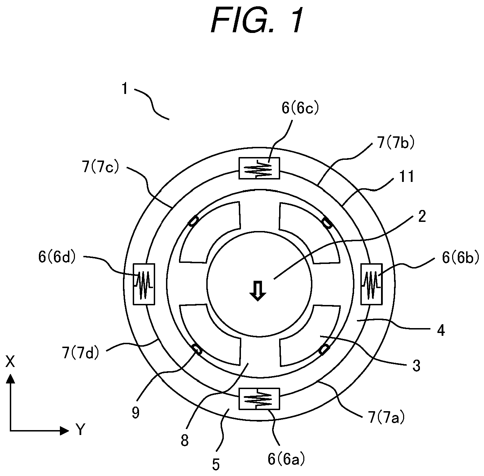

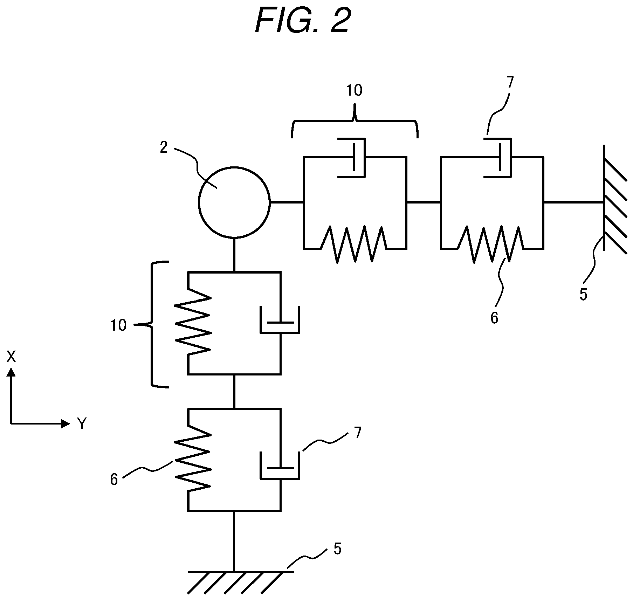

Referring to Figs. 1 and 2, a bearing device with a squeeze film damper according to a first embodiment of the present invention will be described below.

Fig. 1 is a cross sectional view of a bearing device 1 with a squeeze film damper according to the present embodiment, taken along a plane perpendicular to the axial direction. Lubricating oil (not illustrated) for the bearing device 1 is supplied from an oil feeding tank into the bearing device 1 through piping by a pump and is fed into a main bearing 8 and squeeze film damper parts 7 in a distributed manner.

The bearing device 1 with the squeeze film damper includes the main bearing 8, a housing 5, and the plurality of squeeze film damper parts 7.

The main bearing 8 is a tilting-pad journal bearing that supports a rotating shaft 2. The main bearing 8 includes a plurality of pads 3 that constitute a bearing surface supporting the rotating shaft 2, pivots 9 that support the pads 3 in a tilting manner, and a bearing housing 4 that accommodates the pads 3 and the pivots 9.

The plurality of pads 3 are arranged in the circumferential direction and are located around the rotating shaft 2 when supporting the rotating shaft 2. In the present embodiment, the pads 3 of the main bearing 8 are arranged in the Load between pad (hereinafter referred to as "LBP") form, and a position just under the supported rotating shaft 2 in a self-weight direction (the direction indicated by an arrow with a blank inside in Fig. 1) is located between the two pads 3. Although Fig. 1 illustrates an example of the four pads 3, the number of pads 3 may not be four.

Lubricating oil fed into the main bearing 8 flows into a clearance between the pads 3 and the rotating shaft 2 to form a main-bearing oil film.

The housing 5 is located outside the bearing housing 4 in the radial direction.

The squeeze film damper parts 7 are formed at a clearance 11 between the bearing housing 4 and the housing 5, are arranged in the circumferential direction, and include elastic bodies 6 on both ends in the circumferential direction. Specifically, the squeeze film damper parts 7 are formed by dividing the clearance 11 (the clearance 11 extending around the entire circumference) between the bearing housing 4 and the housing 5 in the radial direction by the plurality of elastic bodies 6. The elastic bodies 6 divide the clearance 11 extending around the entire circumference, into multiple sections in the circumferential direction. That is, each of the squeeze film damper parts 7 includes the clearance 11 (the clearance 11 divided in the circumferential direction) between the bearing housing 4 and the housing 5 in the radial direction and the elastic bodies 6 that are located on both ends of the clearance 11 in the circumferential direction. Lubricating oil for the bearing device 1 is fed into the clearance 11 to form a squeeze film.

The squeeze film damper parts 7 dampen the vibrations of the rotating shaft 2 by the actions of squeeze film dampers (fluid-film dampers) and effectively suppress the vibrations by the actions of the elastic bodies 6 as will be described later. Thus, the bearing device 1 with the squeeze film damper according to the present embodiment is able to obtain high vibration stability.

The elastic bodies 6 are provided at the clearance 11 between the bearing housing 4 and the housing 5 in the radial direction and are fixed to the bearing housing 4 and the housing 5. The elastic bodies 6 may be mounted at recess portions that are provided on the bearing housing 4 and dented inward in the radial direction and may be mounted at recess portions that are provided on the housing 5 and dented outward in the radial direction. That is, the elastic bodies 6 can be mounted at one or both of the recess portions.

The elastic bodies 6 can be mounted at any positions in the circumferential direction. Note that the elastic bodies 6 are preferably located at equal intervals in the circumferential direction. That is, the squeeze film damper parts 7 preferably have equal lengths in the circumferential direction.

In the present embodiment, the pads 3 of the main bearing 8 are arranged in the LBP form, and the position of at least one of the elastic bodies 6 in the circumferential direction is located between the two pads 3 adjacent to each other in the circumferential direction.

In the example of Fig. 1, the bearing device 1 with the squeeze film damper includes the four squeeze film damper parts 7 (7a, 7b, 7c, 7d) and the four elastic bodies 6 (6a, 6b, 6c, 6d). However, the bearing device 1 may include any number of squeeze film damper parts 7 and any number of elastic bodies 6. In the example of Fig. 1, the clearance 11 (the clearance 11 extending around the entire circumference) between the bearing housing 4 and the housing 5 in the radial direction is divided into four sections in the circumferential direction by the elastic bodies 6a to 6d, and constitutes the four squeeze film damper parts 7a to 7d. For example, the squeeze film damper part 7a includes the elastic body 6a, the elastic body 6b, and the clearance 11 located between the elastic body 6a and the elastic body 6b in the circumferential direction.

The elastic bodies 6 are elastic bodies configured to repel a radial force, and apply an elastic force in the radial direction. The elastic bodies 6 dampen the vibrations of the rotating shaft 2 with a repulsive force against a radial force. The elastic body 6 may be composed of any elastic body, for example, a plate spring. The spring constants, the positions, and the number of the elastic bodies 6 can be determined arbitrarily and can also be changed.

In the present embodiment, the elastic bodies 6 are set such that stiffness generated by all the elastic bodies 6 varies in the X direction (vertical direction) and the Y direction (horizontal direction). That is, the elastic bodies 6 are set such that the overall stiffness of the elastic bodies 6 varies in the X direction and the Y direction. For example, the elastic bodies 6 are set such that a difference is large between the values of the spring constants of all the elastic bodies 6 in the X direction and the Y direction. Although each of the elastic bodies 6 is able to have any spring constant, all the elastic bodies 6 are set such that the anisotropy of the spring constant is large in the X direction and the Y direction.

The effects of the bearing device 1 with the squeeze film damper according to the present embodiment will be described below.

Fig. 2 illustrates a model configured such that the bearing device 1 with the squeeze film damper according to the present embodiment dampens the vibrations of the rotating shaft 2. Fig. 2 shows the rotating shaft 2, the models of a main-bearing oil film 10, the models of the elastic body 6, and the models of the squeeze film damper part 7 of the bearing device 1 with the squeeze film damper. In Fig. 2, the models of the main-bearing oil film 10, the elastic body 6, and the squeeze film damper part 7 are classified into the models for vibrations in the X direction and the model for vibrations in the Y direction. The main-bearing oil film 10 is formed in a clearance between the pads 3 (Fig. 1) and the rotating shaft 2.

The spring constant of the main-bearing oil film 10 in the X direction is denoted as Kbx, and the spring constant in the Y direction is denoted as Kby. The spring constant of the elastic body 6 in the X direction is denoted as Kex, and the spring constant in the Y direction is denoted as Key.

The equation of motion of the rotating shaft 2 is expressed by formula (1).

[Formula 1]

$$\begin{bmatrix} M & 0 \\ 0 & M \end{bmatrix} \begin{bmatrix} \ddot{X} \\ \ddot{Y} \end{bmatrix} + \begin{bmatrix} K_X & K \\ -K & K_Y \end{bmatrix} \begin{bmatrix} X \\ Y \end{bmatrix} = 0$$

$$(1)$$

An equation for evaluating the vibration stability of the rotating shaft 2 is expressed by formula (2).

[Formula 2]

$$K \leq \frac{|K_X - K_Y|}{2}$$

$$(2)$$

In formula (1) and formula (2), M represents the mass of the rotating shaft 2 and (X,Y) represents the displacement of the rotating shaft 2. Moreover, KX is a spring constant determined by combining the spring constant Kbx of the main-bearing oil film 10 in the X direction and the spring constant Kex of the elastic body 6 in the X direction, and KY is a spring constant determined by combining the spring constant Kby of the main-bearing oil film 10 in the Y direction and the spring constant Key of the elastic body 6 in the Y direction. K is the total spring constant of a system composed of the main-bearing oil film 10, the elastic bodies 6, and the squeeze film damper parts 7. Furthermore, in formula (1), dots on X and Y are symbols representing time derivatives. In other words, the first term on the left side of formula (1) is a term for the acceleration of the rotating shaft 2.

Formula (2) is a formula that expresses the conditions for stabilizing the vibrations of the rotating shaft 2. Formula (2) is a known formula. In formula (2), the larger the value of the right side compared to the value of the left side, the more the vibrations of the rotating shaft 2 are stabilized.

Formula (2) proves that the vibration stability increases with a difference between KX and KY, that is, the anisotropy of the spring constant in the X direction and the Y direction.

In the present embodiment, as described above, the elastic bodies 6 are set such that a difference is large between the values of the spring constant in the X direction and the spring constant in the Y direction (that is, the anisotropy of the spring constant is large). Thus, the bearing device 1 with the squeeze film damper according to the present embodiment has a spring constant with large anisotropy, so that the vibrations of the rotating shaft 2 can be more effectively suppressed to obtain high vibration stability.

SECOND EMBODIMENT

A bearing device 1 with a squeeze film damper according to a second embodiment of the present invention will be described below. The bearing device 1 with the squeeze film damper according to the present embodiment has a similar configuration to that of the bearing device 1 with the squeeze film damper according to the first embodiment, but stiffness (spring constant) generated by all elastic bodies 6 in the X direction (vertical direction) is larger than stiffness in the Y direction (horizontal direction). That is, the elastic bodies 6 are set such that the overall stiffness (spring constant) of the elastic bodies 6 in the X direction is larger than that in the Y direction.

The effects of the bearing device 1 according to the present embodiment will be described below. Generally, the spring constant of a main-bearing oil film 10 of a main bearing 8 is larger in the X direction, that is, in the self-weight direction of a rotating shaft 2 than that in the Y direction. In the present embodiment, the spring constant generated by the elastic body 6 in the X direction is larger than the spring constant in the Y direction, and thus a spring constant determined by combining the spring constant of the main-bearing oil film 10 and the spring constant of the elastic body 6 is considerably larger in the X direction than in the Y direction. That is, the bearing device 1 with the squeeze film damper according to the present embodiment has a spring constant with large anisotropy, so that the vibrations of the rotating shaft 2 can be more effectively suppressed to obtain high vibration stability.

THIRD EMBODIMENT

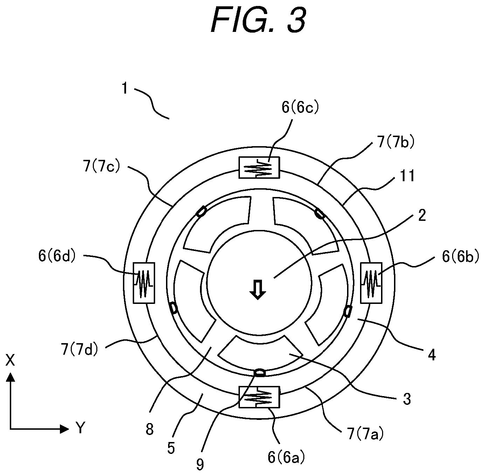

Referring to Fig. 3, a bearing device 1 with a squeeze film damper according to a third embodiment of the present invention will be described below.

Fig. 3 is a cross sectional view of the bearing device 1 with the squeeze film damper according to the present embodiment, taken along a plane perpendicular to the axial direction. The bearing device 1 according to the present embodiment has a similar configuration to that of the bearing device 1 according to the first embodiment but is different in the arrangement of pads 3 of a main bearing 8. In the first embodiment, the arrangement of the pads 3 of the main bearing 8 is the LBP form.

In the present embodiment, the pads 3 of the main bearing 8 are arranged in the Load On Pad (hereinafter referred to as "LOP") form. When the pads 3 are supporting the rotating shaft 2, one of the pads 3 is located just under the rotating shaft 2 in the self-weight direction (the vertical direction, that is, the direction indicated by an arrow with a blank inside in Fig. 3). Although Fig. 3 illustrates an example of the five pads 3, the number of pads 3 may not be five.

In the present embodiment, the pads 3 of the main bearing 8 are arranged in the LOP form, and the position of at least one of elastic bodies 6 in the circumferential direction is located at the same position as any one of the pads 3 in the circumferential direction.

The effects of the bearing device 1 according to the present embodiment will be described below. In the LOP form, the self-weight of the rotating shaft 2 is mainly supported by the single pad 3 located just under the rotating shaft 2 in the self-weight direction. Thus, in this pad 3, a main-bearing oil film 10 of the main bearing 8 has a larger thickness than in the other pads 3. Accordingly, the main-bearing oil film 10 has a larger spring constant in the X direction than in the Y direction. By adjusting the elastic body 6 (for example, by adjusting the spring constant generated by the elastic body 6 in the X direction to a spring constant larger than the spring constant in the Y direction), a spring constant determined by combining the spring constant of the main-bearing oil film 10 and the spring constant of the elastic body 6 is larger in the X direction than in the Y direction. That is, the bearing device 1 with the squeeze film damper according to the present embodiment has a spring constant with large anisotropy, so that the vibrations of the rotating shaft 2 can be more effectively suppressed to obtain high vibration stability.

FOURTH EMBODIMENT

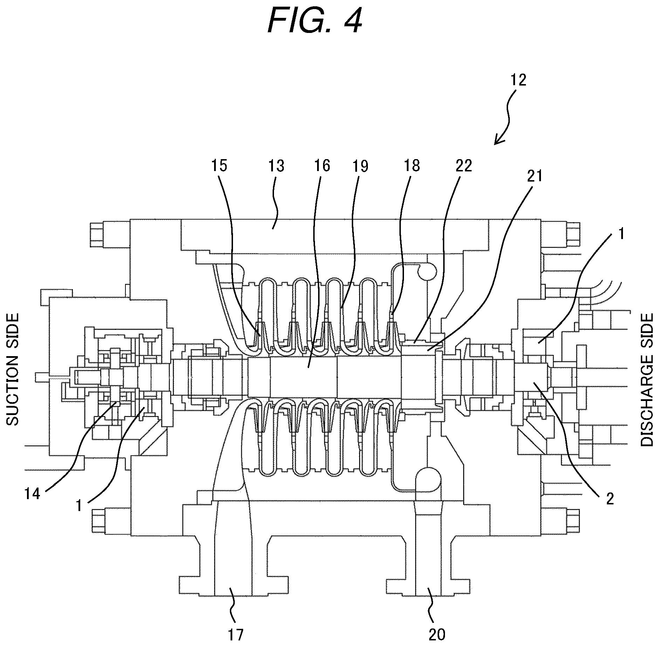

Referring to Fig. 4, a fourth embodiment of the present invention will be described below. The present embodiment will describe a centrifugal compressor including the bearing device 1 with the squeeze film damper according to the first to third embodiments.

Fig. 4 illustrates the configuration of a centrifugal compressor 12 including the bearing device 1 with the squeeze film damper.

The centrifugal compressor 12 according to the present embodiment includes a cylindrical casing 13 serving as a stator (static unit), a rotating shaft 2 that is rotatably provided in the casing 13, the bearing device 1 with the squeeze film damper and a thrust bearing 14 that rotatably support the rotating shaft 2, and a multistage impeller 15 mounted on the rotating shaft 2. The bearing device 1 with the squeeze film damper is any one of the bearing devices 1 described according to the first to third embodiments. The rotating shaft 2 and the impeller 15 constitute a rotor (body of rotation) 16.

The present embodiment describes an example of a single-shaft multistage centrifugal compressor including the multistage impeller 15 on the single rotating shaft 2, as the centrifugal compressor 12. Note that the bearing devices 1 according to the first to third embodiments are also applicable to a single-stage centrifugal compressor including the single-stage impeller 15 on the single rotating shaft 2. For example, the centrifugal compressor 12 in Fig. 4 includes the five-stage impeller 15.

The casing 13 includes a suction passage 17, a diffuser 18, a return passage 19, and a discharge passage 20. The suction passage 17 introduces gas, that is, working fluid into the single-stage impeller 15. The diffuser 18 converts the kinetic energy of gas emitted from the impeller 15 of each stage into pressure energy. The return passage 19 introduces compressed gas from the diffuser 18 to the impeller 15 of the subsequent stage. The discharge passage 20 discharges gas from the impeller 15 of the final stage to an outside of the casing 13.

The bearing device 1 with the squeeze film damper is provided on an end of the suction side (left side of Fig. 4) of the casing 13 and an end of the discharge side (right side of Fig. 4) of the casing 13. The rotating shaft 2 of the rotor 16 is rotatably supported by the bearing devices 1 with the squeeze film dampers. The thrust bearing 14 is provided on the end of the suction side of the rotating shaft 2 and receives a thrust load. A balance piston 21 for offsetting the thrust load is provided on a discharge side of the impeller 15 of the final stage on the rotating shaft 2.

A driving machine such as a motor (not shown) is coupled to the end of the discharge side of the rotating shaft 2. The rotor 16 is rotated by the driving machine. The rotation of the rotor 16 causes suction of gas from the suction passage 17. The gas is sequentially compressed by the multistage impeller 15 and is finally discharged from the discharge passage 20.

The centrifugal compressor 12 according to the present embodiment as a seal unit for suppressing fluid leakage has the following configuration. An impeller-nozzle labyrinth seal is provided in a clearance between a nozzle of the impeller 15 at each stage and the casing 13. The impeller-nozzle labyrinth seal suppresses the passage of gas from the impeller 15 back to an inlet side of the impeller 15 through the clearance. Between the impeller 15 of the preceding stage and the impeller 15 of the subsequent stage, an intermediate-stage labyrinth seal is provided in a clearance between the rotor 16 and the casing 13. The intermediate-stage labyrinth seal suppresses the passage of gas from the return passage 19 back to an exit side of the impeller 15 of the preceding stage through the clearance. A balance-piston-unit labyrinth seal 22 is provided in a clearance between the balance piston 21 of the rotor 16 and the casing 13. The balance-piston-unit labyrinth seal 22 suppresses leakage of high pressure gas from the impeller 15 of the final stage to a low pressure part.

The effects of the centrifugal compressor 12 according to the present embodiment will be described below. In the centrifugal compressor 12, in the case of a high rotation speed or high pressure working fluid, the seal unit for suppressing fluid leakage has an uneven pressure distribution in the circumferential direction. Thus, an unstable force is generated on the rotating shaft 2 by a fluid force, causing larger vibrations on the rotating shaft 2. The centrifugal compressor 12 according to the present embodiment includes the bearing device 1 with the squeeze film damper according to the first to third embodiments. The bearing device 1 supports the rotating shaft 2. Since the bearing device 1 has excellent vibration stability, unstable vibrations caused by the fluid force can be suppressed. Thus, the centrifugal compressor 12 according to the present embodiment advantageously obtains high vibration stability and high reliability even when a large fluid force is applied in the case of a high rotation speed or high pressure working fluid.

It should be noted that the present invention is not limited to the embodiments described above, and includes various modification. For example, the embodiments described above have been described in detail to simply describe the present invention, and are not necessarily required to include all the described configurations. In addition, part of the configuration of one embodiment can be replaced with the configurations of other embodiments. In addition, the configuration of the one embodiment can also be added with the configurations of other embodiments. In addition, part of the configuration of each of the embodiments can be subjected to addition, deletion, and replacement with respect to other configurations.

LIST OF REFERENCE CHARACTERS

| | |
|---|---|
| 1: | Bearing device with squeeze film damper |
| 2: | Rotating shaft |
| 3: | Pad |
| 4: | Bearing housing |
| 5: | Housing |
| 6, 6a to 6d: | Elastic body |
| 7, 7a to 7d: | Squeeze film damper part |
| 8: | Main bearing |
| 9: | Pivot |
| 10: | Main-bearing oil film |
| 11: | Clearance |
| 12: | Centrifugal compressor |
| 13: | Casing |
| 14: | Thrust bearing |
| 15: | Impeller |
| 16: | Rotor |
| 17: | Suction passage |
| 18: | Diffuser |
| 19: | Return passage |
| 20: | Discharge passage |
| 21: | Balance piston |
| 22: | Balance-piston-unit labyrinth seal |

**Claims**

1. A bearing device with a squeeze film damper, comprising:

   a plurality of pads that constitute a bearing surface supporting a rotating shaft;
   a bearing housing that accommodates the pads;
   a housing that is located outside the bearing housing in a radial direction; and
   a plurality of squeeze film damper parts arranged in a circumferential direction at a clearance between the bearing housing and the housing, wherein
   each of the squeeze film damper parts includes a plurality of elastic bodies that repel a radial force, and
   the plurality of elastic bodies are set such that overall stiffness is different between in a vertical direction and in a horizontal direction.

2. The bearing device with the squeeze film damper according to claim 1, wherein
   the plurality of elastic bodies are located on both ends of each of the squeeze film damper parts in a circumferential direction.

3. The bearing device with the squeeze film damper according to claim 1, wherein
   the plurality of elastic bodies are set such that the overall stiffness in the vertical direction is larger than the overall stiffness in the horizontal direction.

4. The bearing device with the squeeze film damper according to claim 1, wherein
   a position of at least one of the plurality of elastic bodies in the circumferential direction is located between two of the pads that are adjacent to each other in the circumferential direction.

5. The bearing device with the squeeze film damper according to claim 1, wherein
   a position of at least one of the plurality of elastic bodies in the circumferential direction is located at a same position as one of the pads in the circumferential direction.

6. The bearing device with the squeeze film damper according to claim 5, wherein
when the pads are supporting the rotating shaft, one of the pads is located just under the rotating shaft in a self-weight direction of the rotating shaft.

7. The bearing device with the squeeze film damper according to claim 1, wherein
each of the plurality of elastic bodies is a plate spring.

8. A centrifugal compressor comprising:

a rotating shaft; and
a bearing device with a squeeze film damper, the bearing device supporting the rotating shaft, wherein
the bearing device with the squeeze film damper is a bearing device with a squeeze film damper according to any one of claims 1 to 7.

# FIG. 1

# FIG. 2

# FIG. 3

# FIG. 4

## INTERNATIONAL SEARCH REPORT

International application No.

**PCT/JP2023/042961**

### A. CLASSIFICATION OF SUBJECT MATTER

*F16C 27/02*(2006.01)i; *F04D 29/056*(2006.01)i; *F16C 27/00*(2006.01)i
FI: F16C27/02 Z; F04D29/056 B; F16C27/00 A

According to International Patent Classification (IPC) or to both national classification and IPC

### B. FIELDS SEARCHED

Minimum documentation searched (classification system followed by classification symbols)

F16C27/02; F04D29/056; F16C27/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2006/0008188 A1 (NICHOLAS, John C.) 12 January 2006 (2006-01-12) | 1-7 |
| | paragraphs [0024]-[0043], fig. 1-7, particularly, fig. 4, 5 | |
| Y | | 8 |
| Y | JP 2001-50267 A (HITACHI, LTD.) 23 February 2001 (2001-02-23) | 8 |
| | paragraphs [0022], [0023], [0047]-[0049], fig. 1, 6 | |
| A | JP 2019-100414 A (MITSUBISHI HEAVY INDUSTRIES, LTD.) 24 June 2019 (2019-06-24) | 1-8 |
| A | JP 57-86615 A (EBARA CORPORATION) 29 May 1982 (1982-05-29) | 1-8 |
| A | JP 57-192621 A (HITACHI, LTD.) 26 November 1982 (1982-11-26) | 1-8 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/042961**

| Patent document cited in search report | | | Publication date (day/month/year) | Patent family member(s) | Publication date (day/month/year) |
|---|---|---|---|---|---|
| US | 2006/0008188 | A1 | 12 January 2006 | (Family: none) | |
| JP | 2001-50267 | A | 23 February 2001 | (Family: none) | |
| JP | 2019-100414 | A | 24 June 2019 | (Family: none) | |
| JP | 57-86615 | A | 29 May 1982 | (Family: none) | |
| JP | 57-192621 | A | 26 November 1982 | (Family: none) | |

Form PCT/ISA/210 (patent family annex) (January 2015)

**EP 4 632 242 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001050267 A